# EUROPÄISCHE PATENTSCHRIFT

(11) **EP 0 886 593 B1**
(45) Veröffentlichungstag und Bekanntmachung des Hinweises auf die Patenterteilung: **19.12.2001**
(21) Anmeldenummer: 97914246.0
(22) Anmeldetag: 14.03.1997
(51) Int. Cl.: B60T 11/232, B60T 11/20

(54) **HAUPTZYLINDER**
MAIN BRAKE CYLINDER
MAITRE-CYLINDRE

(30) Priorität: 19.03.1996 DE 19610834
(43) Veröffentlichungstag der Anmeldung: 30.12.1998
(73) Patentinhaber: Lucas Industries Limited, London W1Y 4DJ (GB)
(72) Erfinder: UNTERBERG, Hartmut, D-56072 Koblenz (DE)
(74) Vertreter: Beyer, Andreas, Dr.
(86) Internationale Anmeldenummer: EP9701306
(87) Internationale Veröffentlichungsnummer: WO9734790

(56) Entgegenhaltungen:
- DE-A- 4 018 494
- DE-A- 4 202 217
- GB-A- 2 148 434

## Beschreibung

Die Erfindung betrifft einen Hauptzylinder, oft auch Hauptbremszylinder genannt, für eine hydraulische Fahrzeugbremsanlage, mit einem Gehäuse, das eine sich entlang einer Längsachse erstrekkende Bohrung aufweist, deren eines Ende von einer zum Gehäuse des Hauptzylinders gehörenden Stirnwand und deren anderes, gegenüberliegendes Ende durch ein Verschlußelement abdichtend verschlossen ist, wobei in der Bohrung benachbart zu dem Verschlußelement ein durch dieses hindurch betätigbarer Kolben abdichtend und axial verschieblich aufgenommen ist, der ein Zentralventil aufweist, das eine Fluidverbindung zwischen einem Fluidreservoir und einer in der Bohrung durch die Stirnwand und den Kolben begrenzten Druckkammer ermöglicht, und das bei unbetätigtem Kolben durch ein auf das Verschlußelement wirkendes Anlagebauteil in Offenstellung gehalten ist, und wobei das Verschlußelement aus zwei separaten, kreisringförmigen und sich axial aneinander anschließenden Teilen gebildet ist, von denen das erste, der Bohrung zugekehrte Teil aus einem Elastomermaterial und das zweite, von der Bohrung abgewandte Teil aus einem starren Material besteht. Ein solcher Hauptzylinder ist aus der EP 0 467 021 A1 bekannt.

Hauptzylinder dieser Art werden in Fahrzeugen vor allem zusammen mit Bremsdruckregelsystemen verwendet, wobei diese Bremsdruckregelsysteme heutzutage häufig sowohl die Funktion haben, ein Blockieren der Fahrzeugräder beim Bremsen zu verhindern (sogenanntes Antiblockiersystem), als auch die Funktion haben, ein Durchdrehen der Antriebsräder beim Beschleunigen insbesondere auf rutschigem Untergrund zu verhindern (sogenannte Antischlupfregelung). Wie bereits erwähnt, wird das in dem Kolben angeordnete Zentralventil im unbetätigten Zustand des Hauptzylinders, d.h. wenn sich der Kolben in seiner Ruhe- bzw. Ausgangsstellung befindet, durch ein mit dem Zentralventil verbundenes Anlagebauteil offengehalten, welches sich direkt oder indirekt an der ihm zugewandten Stirnfläche des zum Verschlußelement gehörenden Teils aus Elasto-mermaterial abstützt.

Geöffnet wird das Zentralventil, indem das mit ihm verbundene Anlagebauteil bei der nach einer Betätigung des Hauptzylinders erfolgenden Rückbewegung des Kolbens in dessen Ausgangsstellung in Anlage mit der dem Anlagebauteil zugewandten Stirnfläche des Verschlußelements gerät und sich dort abstützt, war zum Öffnen des Zentralventils führt. Das bedeutet, daß das Zentralventil gegen den zu diesem Zeitpunkt in der Druckkammer herrschenden Druck geöffnet werden muß. Im normalen Fahrbetrieb ist es häufig so, daß zu dem Zeitpunkt, in dem sich das Anlagebauteil an das Verschlußelement anlegt, kein oder nur ein geringer Überdruck in der Druckkammer vorhanden ist. Unter bestimmten Umständen kann es jedoch dazu kommen, daB das Zentralventil noch gegen einen erheblichen Überdruck geöffnet werden muß, insbesondere dann, wenn direkt anschließend an einen Antischlupfregelzyklus eine Bremsung erforderlich ist und deshalb der Hauptzylinder betätigt wird. In einem solchen Fall hat der im Rahmen der Antischlupfregelung in der Druckkammer des Hauptzylinders aufgebaute Fluiddruck vor der sich direkt anschließenden Bremsbetätigung keine Gelegenheit mehr, sich zu entspannen, da das zusätzliche Fluidvolumen, das während des Antischlupfregelzyklus der Druckkammer zum Druckaufbau zugeführt worden war, aufgrund der sich zeitlich direkt anschließenden Bremsbetätigung nicht in den Fluidvorratsbehälter zurückgeleitet werden kann. Abhängig von dem in der Druckkammer noch vorherrschenden Fluiddruck, variiert jedoch der Öffnungszeitpunkt des Zentralventils, da das mit dem Zentralventil verbundene Anlagebauteil umso tiefer in das Elastomerteil des Verschlußelements eindringt, je höher der in der Druckkammer dann noch vorherrschende Druck ist und sich das Zentralventil erst bei einer entsprechenden, von dem Verschlußelement auf das Anlagebauteil ausgeübten Gegenkraft öffnen kann. Eine klare Definition des Öffnungszeitpunktes des Zentralventils in bezug auf den in der Bohrung des Hauptzylinders angeordneten Kolben ist somit nicht möglich, das Zentralventil öffnet abhängig von bestimmten Betriebsbedingungen einmal früher und einmal später. Dies ist aus Gründen eines möglichst gleichbleibenden Bremsansprechverhaltens unerwünscht.

Der Erfindung liegt die Aufgabe zugrunde, einen Hauptzylinder der eingangs beschriebenen Art so weiterzubilden, daß ein möglichst gleichbleibendes Bremsansprechverhalten, insbesondere ein allzeit definiertes Öffnungsverhalten des Zentralventils, unabhängig von den Betriebsbedingungen gewährleistet ist.

Diese Aufgabe ist erfindungsgemäß dadurch gelöst, daß die beiden Teile des Verschlußelements lösbar miteinander verbunden sind und ein einstückig mit dem Teil aus starrem Material ausgebildeter, ringförmig umlaufender Vorsprung, dessen größte Querschnittsabmessung höchsten nur etwa die Hälfte der Querschnittsabmessung des Teils aus Elastomermaterial beträgt, letzteres axial vollständig oder nahezu vollständig durchsetzt. Mit "nahezu vollständig" ist hier gemeint, daß der auf dem Teil aus starrem Material ausgebildete, ringförmig umlaufende Vorsprung sein axiales, freies Ende nicht genau in der dem Anlagebauteil zugewandten Stirnfläche des Elastomerteils hat, sondern etwas darunter, d.h., daß das axiale, freie Ende des Vorsprungs in Axialrichtung etwas weiter von dem mit dem Zentralventil verbundenen Anlagebauteil entfernt ist, als die Stirnfläche des Elastomerteils. Durch den leichten Überstand des Elastomerteils bezüglich des Teils aus starrem Material wird gewährleistet, daß das Anlagebauteil sich immer weich und leicht gedämpft an das Verschlußelement anlegt, dann jedoch sofort mit dem freien Ende des am Teil aus starrem Material ausgebildeten Vorsprungs in Berührung kommt, so daß unabhängig von dem Druck, gegen das Zentralventil geöffnet werden muß, ein definiertes Öffnen des Zentralventils sichergestellt ist. Die beschriebene Ausbildung des erfindungsgemäßen Verschlußelements stellt somit einen starren bzw. quasi-starren Anschlag für das mit dem Zentralventil verbundene Anlagebauteil oder eine zwischen diesem Anlagebauteil und dem Verschlußelement angeordnete Anlagescheibe dar, ohne daß deshalb die Dichtungsfunktion des Verschlußelements leidet. Da die größte Querschnittsabmessung des umlaufenden Vorsprungs nur etwa höchstens die Hälfte der Querschnittsabmessung des Elastomerteils beträgt, verbleibt radial innerhalb und radial außerhalb des Vorsprungs genügend Elastomermaterial für eine gute, auch radial elastische Abdichtung.

Der ringförmig umlaufende Vorsprung des Teils aus starrem Material kann beispielsweise die Form eines geschlossenen Kreisrings aufweisen. Der radial äußere und der radial innere Abschnitt des Elastomerteils sind dann durch mehrere brückenförmige Verbindungsstücke, die sich über den Vorsprung hinweq erstrecken, miteinander verbunden. Alternativ kann der ringförmig umlaufende Vorsprung durch mehrere Kreisringsegmente gebildet sein, zwischen denen Platz für Verbindungsstege zwischen dem radial äußeren und dem radial inneren Abschnitt des Elastomerteils gelassen ist. Gemäß einer weiteren Abwandlung kann zumindest das freie Ende des ringförmig umlaufenden Vorsprungs von einer Reihe stiftförmiger Fortsätze gebildet sein, die in Umfangsrichtung voneinander vorzugsweise gleichmäßig beabstandet sind und die sich axial erstrecken. Der starre bzw. quasi-starre Anschlag wird bei einer solchen Ausführungsform durch eine kreisringförmige Anordnung angenähert punktförmiger Anlageflächen gebildet.

Unabhängig von der Ausbildung des ringförmig umlaufenden Vorsprungs verringert sich bevorzugt die Querschnittsabmessung des Vorsprungs zu dessen freiem Ende hin. Dabei kann die Verringerung der Querschnittsabmessung des Vorsprungs kontinuierlich oder auch stufenweise erfolgen. Durch die Verringerung der Querschnittsabmessung wird eine noch bessere Dichtwirkung erreicht, da zum freien Ende des Vorsprungs hin radial innerhalb und radial außerhalb desselben zunehmend mehr Elastomermaterial vorhanden ist, woraus eine bessere radiale Ausgleichsfähigkeit des Verschlußelements im Bereich seines Elastomerteils resultiert.

Bevorzugt weist das Teil aus starrem Material des Verschlußelements auf seiner von dem Teil aus Elastomermaterial abgekehrten Stirnseite einen hohlzylindrischen Fortsatz auf. Dieser Fortsatz dient zur besseren Führung eines Betätigungselementes, das auf den in der Bohrung des Hauptzylinders angeordneten Kolben wirkt.

Um auch bei höherem Druck eine gute Dichtwirkung des Verschlußelements zu gewährleisten, soll dessen Teil aus starrem Material im Bereich der Fläche, mit der es am Teil aus Elastomermaterial anliegt, insbesondere keine Durchgangsausnehmungen aufweisen. Bereiche des Elastomerteils könnten sich sonst bei entsprechender Druckbelastung in solche Durchgangsausnehmungen eindrücken, wodurch Elastomermaterial an anderen Dichtstellen fehlen würde.

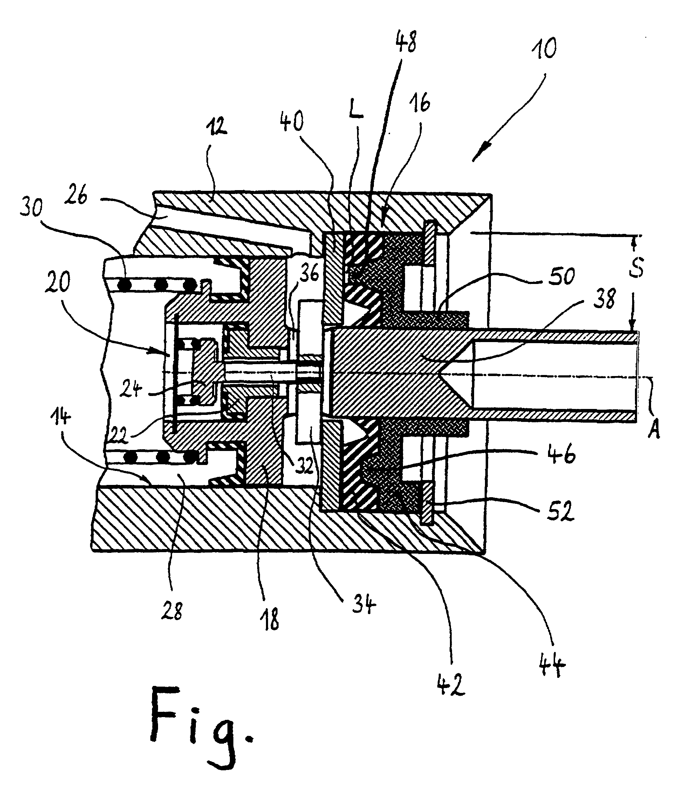

Ein Ausführungsbeispiel eines erfindungsgemäßen Hauptzylinders wird im folgenden anhand der beigefügten Figur näher erläutert, in der im Querschnitt der hier interessierende Endabschnitt eines erfindungsgemäßen Hauptzylinders vergrößert dargestellt ist.

Die einzige Figur zeigt das krafteingangsseitige Ende eines allgemein mit 10 bezeichneten Hauptzylinders für eine hydraulische Fahrzeugbremsanlage. Der Hauptzylinder 10 hat ein langgestrecktes Gehäuse 12 mit einer entlang einer Längsachse A verlaufenden und im dargestellten Ausführungsbeispiel stufenförmig ausgebildeten Bohrung 14. Das hier nicht dargestellte, eine Ende dieser Bohrung 14 ist üblicherweise von einer zum Gehäuse 12 des Hauptzylinders 10 gehörenden Stirnwand dicht verschlossen. Das diesem Ende gegenüberliegende, andere Ende der Bohrung 14 ist wie dargestellt mit einem Verschlußelement 16 abdichtend verschlossen, dessen Aufbau später noch näher erläutert wird.

In der Bohrung 14 ist benachbart zu dem Verschlußelement 16 ein durch letzteres hindurch betätigbarer Kolben 18 abdichtend und axial verschieblich aufgenommen. In dem Kolben 18 ist ein Zentralventil 20 mit einem Ventilsitz 22 und einem federnd in Richtung auf den Ventilsitz 22 vorgespannten, axial beweglichen Ventilkörper 24 angeordnet. Das Zentralventil 20 gibt im dargestellten, geöffneten Zustand über eine Nachlaufbohrung 26 eine Fluidverbindung zwischen einem nicht gezeigten, mit der Nachlaufbohrung 26 in Verbindung stehenden Fluidreservoir und einer Druckkammer 28 frei, die in der Bohrung 14 zwischen dem Kolben 18 und dem nicht dargestellten, verschlossenen einen Ende der Bohrung 14 begrenzt ist. Der Kolben 18 ist in der Figur in seiner Ruhe- oder Ausgangsstellung wiedergegeben, die er im unbetätigten Zustand einnimmt und in die er in üblicher Weise durch eine Rückstellfeder 30 vorgespannt wird. Die nicht dargestellten Teile des Hauptzylinders 10 sind von üblicher, bekannter Bauart und werden daher nicht näher erläutert. Neben dem gezeigten Kolben 18 kann sich im nicht dargestellten Teil des Hauptzylinders 10 ein ähnlich aufgebauter, zweiter Kolben befinden, der dann als Sekundärkolben bezeichnet wird.

Der Ventilkörper 24 des Zentralventils 20 hat einen sich durch den Kolben 18 hindurch erstreckenden, stiftförmigen Fortsatz 32, an dessen freiem Ende ein als Anschlagbauteil dienender Querstift 34 befestigt ist. Der Querstift 34 ist mit Spiel in einer radialen Durchgangsausnehmung 36 eines einstückig mit dem Kolben 18 verbundenen Betätigungsfortsatzes 38 verringerten Durchmessers aufgenommen, der sich durch das Verschlußelement 16 hindurch erstreckt, aus dem Gehäuse 12 des Hauptzylinders 10 herausragt und zur Verbindung mit einem nicht dargestellten, stangenförmigen Eingangsglied vorgesehen ist. Der Querstift 34 liegt dann, wenn der Kolben 18 die dargestellte Ruhestellung einnimmt, an einer Anschlagringscheibe 40 an, die ihrerseits mit der Stirnfläche eines zum Verschlußelement 16 gehörenden Elastomerteils 42 in Berührung steht, so daß das Zentralventil 20 in Offenstellung gehalten ist.

Das Verschlußelement 16 weist neben dem kreisringförmig ausgebildeten Elastomerteil 42 ein sich axial daran anschließendes, separat und ebenfalls kreisringförmig ausgebildetes Teil 44 aus starrem Material auf, beispielsweise aus einem geeigneten, harten Kunststoff. Auf seiner dem Elastomerteil 42 zugewandten Stirnfläche weist das Teil 44 aus starrem Material einen ringförmig umlaufenden, sich axial erstreckenden Vorsprung 46 auf, der sich im gezeigten Beispiel zu seinem freien Ende hin konisch verjüngt und dessen freies Ende von einer Reihe stiftförmiger Fortsätze 48 gebildet ist, die in Umfangsrichtung voneinander gleichmäßig beabstandet sind und die sich ebenfalls axial erstrecken. Wie aus der Figur ersichtlich, ist die Axialerstreckung des Vorsprungs 46 (einschließlich seiner Fortsätze 48) so gewählt, daß das Elastomerteil 42 von dem Vorsprung 46 axial nahezu vollständig durchsetzt ist. Zwischen der mit der Anschlagringscheibe 40 in Berührung stehenden Stirnfläche des Elastomerteils 42 und der stirnseitigen Oberfläche jedes der stiftförmigen Fortsätze 48 besteht lediglich der mit L bezeichnete Freiraum. Die größte Querschnittsabmessung des Vorsprungs 46, die sich beim gezeigten Ausführungsbeispiel aufgrund der konischen Ausgestaltung des Vorsprungs 46 an dessen Basis findet, beträgt weniger als die Hälfte der Querschnittsabmessung S des Elastomerteils 42.

Die aufgrund der separaten Ausbildung kostengünstig getrennt herstellbaren Teile 42 und 44 des Verschlußelements 16 sind durch Zusammenfügen lösbar miteinander verbunden. Das Verschlußelement 16, dessen Teil 44 im dargestellten Beispiel einen einstückig angeformten, hohlzylindrischen Fortsatz 50 zur besseren Führung des Betätigungsfortsatzes 38 aufweist, wird durch einen in einer Umfangsnut angeordneten Sprengring 52 in dem stufenförmig erweiterten Endabschnitt der Bohrung 14 des Hauptzylinders 10 gehalten.

Die Funktion des dargestellten Hauptzylinders 10 ist wie folgt: Ausgehend von der gezeigten Ausgangsstellung aller Teile wird bei einer durch den Fahrer erfolgenden Betätigung der Bremsanlage über das nicht dargestellte, stangenförmige Eingangsglied, welches mit dem Betätigungsfortsatz 38 des Kolbens 18 verbunden ist, der Kolben 18 relativ zum Gehäuse 12 des Hauptzylinders 10 bezogen auf die Figur nach links verschoben. Der Querstift 34, der im unbetätigten Zustand des Hauptzylinders das Zentralventil 20 offenhält, löst sich dabei von der Anschlagringscheibe 40 und das federnd in Schließrichtung vorgespannte Zentralventil 20 schließt sich, wonach entsprechend der weiteren axialen Verschiebung des Kolbens 18 Fluiddruck in der Druckkammer 28 aufgebaut wird. Während einer solchen Betätigung des Hauptzylinders 10 übernimmt das Verschlußelement 16 sowohl die Abdichtung der Bohrung 14 gegenüber dem Betätigungsfortsatz 38 als auch dessen Führung.

Die Entspannungsbewegung beim Lösen der Bremse erfolgt entsprechend in umgekehrter Reihenfolge, d.h. der Kolben 18 verschiebt sich unter der Wirkung der Rückstellfeder 30 bezogen auf die Figur nach rechts und der Querstift 34 kommt kurz vor Erreichen der Ruhestellung des Kolbens 18 in Anlage mit der Anschlagringscheibe 40, so daß sich das Zentralventil 20 wieder öffnet und ein eventuell vorhandener, geringer Restdruck in der Druckkammer 28 über die Nachlaufbohrung 26 in das nicht dargestellte Fluidreservoir abgelassen wird.

Im folgenden soll davon ausgegangen werden, daß kurz vor einer durch den Fahrer erfolgenden Bremsbetätigung ein Antischlupfregelzyklus abgelaufen ist, im Rahmen dessen automatisch ein zusätzliches Fluidvolumen aus dem Fluidreservoir der Druckkammer 28 zugeführt wurde, um Bremsdruck zur Reduzierung des Radschlupfes bereitzustellen. Wird direkt im Anschluß an einen solchen Antischlupfregelzyklus eine Bremsbetätigung vom Fahrer eingeleitet, muß das Zentralventil 20 am Ende der Bremsung gegen einen zum Teil erheblichen Überdruck geöffnet werden, da eine Druckentspannung in der Druckkammer 28 durch eine Rückführung des während des Antischlupfregelzyklus zugeführten, zusätzlichen Fluidvolumens in das Fluidreservoir vor der direkt anschließenden, vom Fahrer eingeleiteten Bremsbetätigung nicht mehr möglich war. Je nachdem, wie groß das während des Antischlupfregelzyklus zugeführte Fluidvolumen war, herrscht also selbst dann in der Druckkammer 28 noch ein mehr oder weniger großer Überdruck, wenn der Kolben 18 nach Beendigung der vom Fahrer eingeleiteten Bremsbetätigung wieder in seine Ausgangsstellung zurückgekehrt ist. Auch in einem solchen Fall verändert sich jedoch der Öffnungszeitpunkt des Zentralventils 20 nur unwesentlich, da der aus der Druckkammer 28 über den Querstift 34 und die Anschlagringscheibe 40 auf die Stirnfläche des Elastomerteils 42 übertragene Druck eine schnelle Komprimierung des Elastomerteils 42 unter Aufhebung der Freiräume L bewirkt, so daß sich die Anschlagringscheibe 40 nahezu verzögerungsfrei an die Kopfflächen der stiftförmigen Fortsätze 48 des am Teil 44 ausgebildeten Vorsprungs 46 legt. Das starre Material des Teils 44 gestattet keine weitere axiale Verlagerung der Anschlagringscheibe 40 und damit auch des Querstiftes 34, so daß das Zentralventil 20 auch gegen hohen Überdruck zuverlässig und unter Einhaltung eines genau definierten Öffnungspunktes in bezug auf die Stellung des Kolbens 18 öffnet.

## Patentansprüche

1. Hauptzylinder (10) für eine hydraulische Fahrzeugbremsanlage mit einem Gehäuse (12), das eine sich entlang einer Längsachse (A) erstreckende Bohrung (14) aufweist, deren eines Ende von einer zum Gehäuse (12) des Hauptzylinders (10) gehörenden Stirnwand und deren anderes, gegenüberliegendes Ende durch ein Verschlußelement (16) abdichtend verschlossen ist, wobei in der Bohrung (14) benachbart zu dem Verschlußelement (16) ein durch dieses hindurch betätigbarer Kolben (18) abdichtend und axial verschieblich aufgenommen ist, der ein Zentralventil (20) aufweist, das eine Fluidverbindung zwischen einem Fluidreservoir und einer in der Bohrung (14) durch die Stirnwand und den Kolben (18) begrenzten Druckkammer (28) ermöglicht, und das bei unbetätigtem Kolben (18) durch ein auf das Verschlußelement (16) wirkendes Anlagebauteil (Querstift 34) in Offenstellung gehalten ist, und wobei das Verschlußelement (16) aus zwei separaten, kreisringförmigen und sich axial aneinander anschließenden Teilen (42, 44) gebildet ist, von denen das erste, der Bohrung (14) zugekehrte Teil (42) aus einem Elastomermaterial und das zweite, von der Bohrung (14) abgewandte Teil (44) aus einem starren Material besteht,
**dadurch gekennzeichnet, daß**
die beiden Teile (42, 44) des Verschlußelementes (16) lösbar miteinander verbunden sind und ein einstückig mit dem Teil (44) aus starrem Material ausgebildeter, ringförmig umlaufender Vorsprung (46), dessen größte Querschnittsabmessung höchstens etwa die Hälfte der Querschnittsabmessung des Teils (42) aus Elastomermaterial beträgt, das Teil (42) aus Elastomermaterial axial vollständig oder nahezu vollständig durchsetzt.

2. Hauptzylinder nach Anspruch 1,
**dadurch gekennzeichnet, daß** die Querschnittsabmessung des Vorsprungs (46) sich zu dessen freiem Ende hin verringert.

3. Hauptzylinder nach Anspruch 2,
**dadurch gekennzeichnet, daß** die Verringerung der Querschnittsabmessung des Vorsprungs (46) stufenweise oder kontinuierlich erfolgt.

4. Hauptzylinder nach einem der Ansprüche 1 bis 3,
**dadurch gekennzeichnet, daß** das freie Ende des Vorsprungs (46) von einer Reihe stiftförmiger Fortsätze (48) gebildet ist, die in Umfangsrichtung voneinander vorzugsweise gleichmäßig beabstandet sind und sich axial erstrecken.

5. Hauptzylinder nach einem der vorhergehenden Ansprüche,
**dadurch gekennzeichnet, daß** das Teil (44) aus starrem Material auf seiner von dem Teil (42) aus Elastomermaterial abgekehrten Stirnseite einen hohlzylindrischen Fortsatz (50) aufweist.

## Claims

1. A master cylinder (10) for a hydraulic vehicle braking system comprising a housing (12) which has a bore (14) extending along a longitudinal axis (A), whose one end is closed by an end wall associated with the housing (12) of the master cylinder (10) and whose other opposite end is sealingly closed by a closure element (16), with a piston (18) being accommodated sealingly and axially movable in the bore (14) adjacent to the closure element (16), which piston (18) can be actuated through same and has a central valve (20) which enables a fluid connection between a fluid reservoir and a pressure chamber (28) which is defined in the bore (14) by the end wall and the piston (18) and which, when the piston (18) is not actuated, is held in the open position by means of an abutment member (transverse pin 34) acting on the closure element (16), and with the closure element (16) being formed from two separate annular parts (42, 44) axially succeeding one another, with the first part (42) facing towards the bore (14) being made from an elastomeric material and the second part (44) facing away from the bore (14) being made from a rigid material,
**characterised in that**
the two parts (42, 44) of the closure element (16) are detachably connected with each other and an annular circumferential projection (46), which is integrally formed with the part (44) made from rigid material whose maximum cross-sectional dimension amounts to not more than approximately half of the cross-sectional dimension of the part (42) made from elastomeric material, penetrates the part (42) made from elastomeric material completely or nearly completely in an axial direction.

2. The master cylinder according to Claim 1,
**characterised in that** the cross-sectional dimension of the projection (46) decreases towards its free end.

3. The master cylinder according to Claim 2,
**characterised in that** the reduction of the cross-sectional dimension of the projection (46) is effected in a step-wise manner or continuously.

4. The master cylinder according to one of Claims 1 to 3,
**characterised in that** the free end of the projection (46) is formed by a number of pin-shaped extensions (48) which are preferably equally spaced in the circumferential direction and which extend in an axial direction.

5. The master cylinder according to one of the preceding claims,
**characterised in that** the part (44) made from rigid material comprises a hollow cylindrical extension (50) at its face end facing away from the part (42) made from elastomeric material.

## Revendications

1. Maître cylindre (10) pour un système de frein de véhicule comprenant un boîtier (12) qui présente un alésage s'étendant suivant un axe longitudinal (A), dont une extrémité est obturée hermétiquement par une paroi frontale appartenant au boîtier (12) du maître cylindre (10) et dont l'autre extrémité, opposée à la première, est obturée hermétiquement par un élément d'obturation (16), un piston (18) pouvant être actionné à travers l'élément d'obturation (16) étant logé à proximité de celui-ci dans l'alésage (14) de façon à pouvoir coulisser axialement dans celui-ci en relation d'étanchéité avec celui-ci, ledit piston (18) présentant une soupape centrale (20) qui permet une communication par fluide entre un réservoir de fluide et une chambre de pression (28) délimitée dans l'alésage (14) par la paroi frontale et le piston (18) et qui est maintenue en position ouverte par une pièce (goupille 34) agissant sur l'élément d'obturation (16) lorsque le piston (18) n'est pas actionné, et l'élément d'obturation (16) étant formé de deux pièces (42, 44) distinctes annulaires et se raccordant axialement l'une à l'autre dont la première pièce (42) située face à l'alésage (14) est en un matériau élastomère et la deuxième pièce (44) située à l'opposé de l'alésage (14) est en un matériau rigide,
**caractérisé en ce que**
les deux pièces (42, 44) de l'élément d'obturation (16) sont reliées entre elles de façon détachable et **en ce qu'**une partie en saillie (46) périphérique annulaire, en matériau rigide, d'une seule pièce avec la pièce (44), dont le plus grand diamètre est au plus égale à environ la moitié du diamètre de la pièce (42) en matériau élastomère, traverse axialement complètement ou presque complètement la partie (42) en matériau élastomère.

2. Maître cylindre selon la revendication 1,
**caractérisé en ce que** la dimension en coupe transversale de la partie en saillie (46) se réduit dans la direction de son extrémité libre.

3. Maître cylindre selon la revendication 2,
**caractérisé en ce que** la réduction de la dimension en coupe transversale de la partie en saillie (46) a lieu par étages ou de façon continue.

4. Maître cylindre selon l'une quelconque des revendications 1 à 3,
**caractérisé en ce que** l'extrémité libre de la partie en saillie (46) est formée par une série de prolongements (48) en forme de broches qui sont espacés périphériquement les uns des autres, de préférence de façon régulière, et s'étendent axialement.

5. Maître cylindre selon l'une quelconque des revendications précédentes,
**caractérisé en ce que** la pièce (44) en matériau rigide présente sur sa face frontale située à l'opposé de la pièce (42) en matériau élastomère un prolongement cylindrique creux (50).
